# EUROPEAN PATENT SPECIFICATION

(11) **EP 4 298 364 B1**
(45) Date of publication and mention of the grant of the patent: **06.08.2025**
(21) Application number: 21728349.8
(22) Date of filing: 04.05.2021
(51) Int. Cl.: F16L 27/108, F01N 3/28, F16L 51/02, F16L 27/11, F16J 3/04, F01N 13/18

(54) **BELLOWS DESIGN TO ABSORB MISALIGNMENT**
FALTENBALGDESIGN ZUR ABSORPTION VON FEHLAUSRICHTUNG
CONCEPTION DE SOUFFLET POUR ABSORBER UN MAUVAIS ALIGNEMENT

(30) Priority: 23.02.2021 US 202163152792 P
(43) Date of publication of application: 03.01.2024
(73) Proprietor: MAG Aerospace Industries, LLC, Carson CA 90746 (US)
(72) Inventor: POMEROY, James W., 77550 Moissy-Cramayel (FR); GOESCHEL, Christoph, 77550 Moissy-Cramayel (FR); BUTTERWORTH, Matthew, 77550 Moissy-Cramayel (FR)
(74) Representative: Casalonga
(86) International application number: PCT/US2021/030645
(87) International publication number: WO 2022/182375

(56) References cited:
- JP-A- S5 087 954
- KR-B1- 101 147 827
- US-A- 1 190 716
- US-A- 5 320 331

## Description

This application claims the benefit of U.S. Provisional Application Serial No. 63/152,792, filed February 23, 2021, titled "Bellows Design to Absorb Off-axis Alignment,".

### FIELD OF THE DISCLOSURE

According to certain embodiments of this disclosure, there is provided a bellows member for use in connecting two plumbing interfaces to one another. The bellows member is a generally hollow design with cuff ends, each of which connects to an ends of another interface. The bellows member has a flexible bellows body center section that moves to accommodate operational off-axis misalignment, while being able to absorb vacuum and pressure differentials. The disclosed bellows resists vacuum implosion and internal pressurization. The flexible center section is provided with a plurality of convolutes oriented radially outwardly on a horizontal axis. The bellows functions to accommodate misalignment between the two plumbing interfaces.

### BACKGROUND

Commonly, misalignment in plumbing lines may be addressed by using flexible components. For example, if a first plumbing interface is mounted such that it is offset from a corresponding plumbing interface to which it should connect, a flexible rubber or silicone component may be used to bridge the offset/gap connection. However, such components may have connections that provide only limited adaptability. Additionally, such components can tend to pucker or bow out when subjected to misalignment. The components may also implode when subjected to high vacuum levels, which are commonly used on-board plumbing systems of passenger transportation vehicles, such as aircraft. Accordingly, improved bellows members are desirable. Document JPS5087954A discloses bellows according to the preamble of claim 1. Similar bellows are also known from KR101147827B1.

### SUMMARY

Accordingly, the present inventors have designed a bellows member that has a flexible bellows body center section that moves to accommodate operational off-axis misalignment, while being able to absorb vacuum and pressure differentials. Specific examples provide a bellows member for connecting two plumbing interfaces, the bellows member comprising: a first cuff end; a second cuff end; a central opening; a bellows body comprising at least one upper convolute, at least one lower convolute, and an outer convolute (38). The upper convolute may be a set of upper convolutes. The lower convolute may be a set of lower convolutes. There may be a space between each upper convolute in the set of upper convolutes and a space between each lower convolute in the set of lower convolutes. The convolutes may generally extend radially from the central opening along a horizontal plane. It is possible for the convolutes to comprise ridges that create the appearance of a ring. In a specific example, the convolutes create the appearance of two rings that encircle the central opening, a first inner ring with a smaller diameter than a second outer ring.

It is also possible for the at least one upper convolute, the at least one lower convolute, and the outer convolute to each have a partial outer curvature. The partial outer curvature(s) can define ridges. In one example, an interior space of each of the ridges may be filled with material, forming an internal smooth void within the bellows body. The bellows member may have a plurality of upper convolutes forming ridges and a plurality of lower convolutes forming ridges, and spaces between each ridge. The bellows member is designed to fit into a small envelope of space. In a specific example, the bellows member has a vertical height that is about 1,27 cm (1/2 inch) to about 10,16 cm (4 inches).

The terms "invention," "the invention," "this invention" "the present invention," "disclosure," "the disclosure," and "the present disclosure," used in this patent are intended to refer broadly to all of the subject matter of this patent and the patent claims below. Statements containing these terms should be understood not to limit the subject matter described herein or to limit the meaning or scope of the patent claims below. Embodiments of the invention covered by this patent are defined by the claims below, not this summary. This summary is a high-level overview of various aspects of the invention and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings and each claim.

### BRIEF DESCRIPTION OF THE DRAWINGS

Figure 1 is a perspective view of a bellows member according to one embodiment of this disclosure.
Figure 2a is a side plan cross-sectional view of the bellows member of Figure 1.
Figure 2b is a side perspective cross-sectional view of the bellows member of Figure 1.
Figure 3a is a side plan cross-sectional view of an alternate bellows member.
Figure 3b is a side perspective cross-sectional view of the bellows member of Figure 3a.
Figure 4 is a perspective view of a bellows member in use with a waste tank system.
Figure 5 is an exploded perspective view of a waste drain valve assembly and an adapter assembly that can be used in connection with the disclosed bellows member.
Figure 6 illustrates a prior art bellows.
Figure 7 illustrates the prior art bellows of Figure 6 with pressure applied thereto.
Figure 8 illustrates the prior art bellows of Figure 6 with lateral misalignment applied thereto.
Figure 9a is a schematic view of a prior art bellows in an aligned configuration.
Figure 9b is a schematic view of a prior art bellows in a laterally displaced configuration.
Figure 10 is a side perspective view of a bellows according to this disclosure and lateral misalignment.
Figure 11a is a side schematic cross-sectional of a bellows according to this disclosure in an aligned configuration.
Figure 11b is a side schematic cross-sectional of a bellows according to this disclosure in a laterally displaced configuration.
Figure 12 is a side perspective view of a prior art bellows imploding upon application of vacuum.

### DETAILED DESCRIPTION

Embodiments of the present disclosure provide a bellows member that can be used to compensate for misalignment between two plumbing interfaces. Embodiments find particular use on board passenger transportation vehicles, where space is a premium and where potential misalignment may occur during vehicle movement. In a specific example, the disclosed bellows member absorbs in-flight vibrational misalignment. For example, a first plumbing interface and a second plumbing interface may need to be secured to one another in such a way that slight movement between each interface will not affect the plumbing connection. In a specific example, this may occur in connection with an aircraft waste tank. The waste tank typically has a waste drain valve assembly (a first plumbing interface) at its outlet, and the waste drain valve assembly connects the waste tank to a service panel (which may be the second plumbing interface). If the waste drain valve assembly and the service panel are not perfectly aligned in the same plane (i.e., they do not share the same central longitudinal axis), a plumbing adapter (which instead may be the second plumbing interface) may be used in order to compensate for the misalignment. (These features and their cooperation with one another are described further below and are mentioned here for context only.)

There is typically a bellows assembly positioned between these two plumbing interfaces, i.e., the waste drain valve assembly and the service panel or a plumbing adapter. The bellows assembly is generally designed to help secure the two plumbing interfaces and to help guide waste from the waste drain to the service panel (via the valve and adapter). The bellows is generally expected to withstand certain levels of vacuum and pressure, as well as certain levels of lateral misalignment due to in-flight motion or vibration.

This disclosure describes an improved bellows member for use in connection with an aircraft waste tank. It should be understood that although the disclosed bellows member may be described and used in conjunction with connecting an aircraft waste tank to a service panel, the bellows member described herein may be used in conjunction with any other types of tanks on board any other types of passenger transportation vehicles. It should also be understood that the bellows member described herein may be used in order to couple other interfaces that require a flexible coupling for securement. Any instance where a bellows or other securement can be used to secure to interfaces to one another may benefit from use of the bellows member described herein.

In addition to designing a bellows member capable of withstanding required levels of vacuum and pressure without imploding or laterally twisting to create bulges in the bellows, the inventors also sought to design a bellows member that could fit within a limited envelope of space. For example, distance between a first and second interface to be connected via the bellows member may be as little as one to five inches. Because of this, a large height bellows member that requires a good deal of space is not optimal. Instead, designing a bellows member with a smaller vertical height (e.g., a smaller top to bottom dimension) was one of the desired design features. Accordingly, the disclosed bellows member is capable of use in low space situations in order to span just a small gap between interfaces. Non-limiting exemplary top to bottom dimensions (e.g., the distance between first and second cuff ends 12, 14) may be between about 1,27 cm (1/2 inch) to about 7,62-10,16 cm (3-4 inches). In a specific embodiment, the top to bottom dimension is about one inch. However, it should be understood that the disclosed bellows member may be scaled up in size in order to be used in environments that have a larger space between first and second interfaces to be connected.

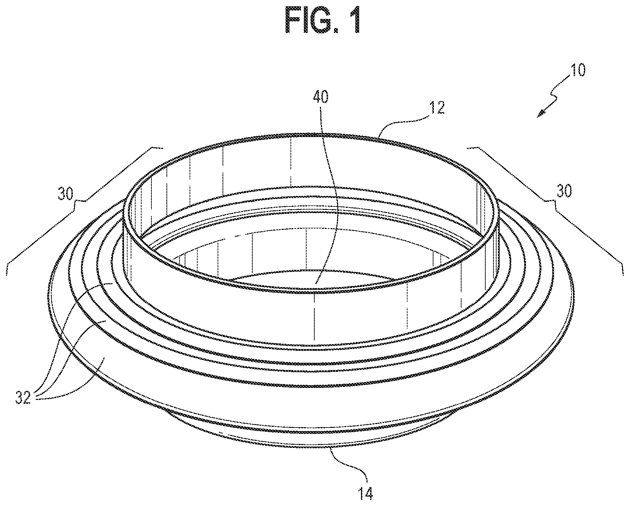

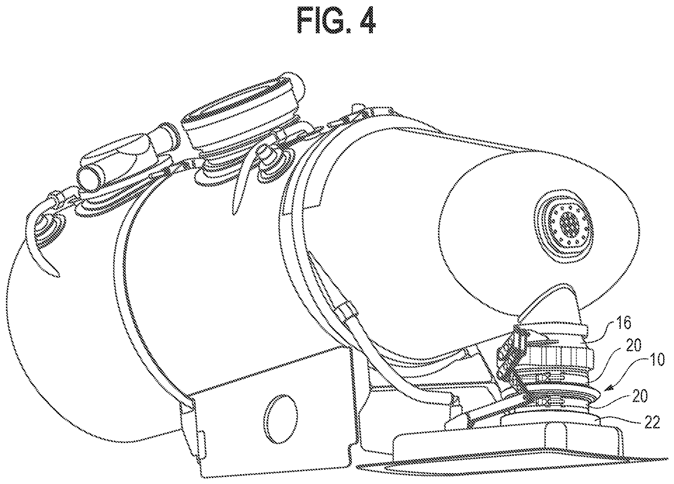

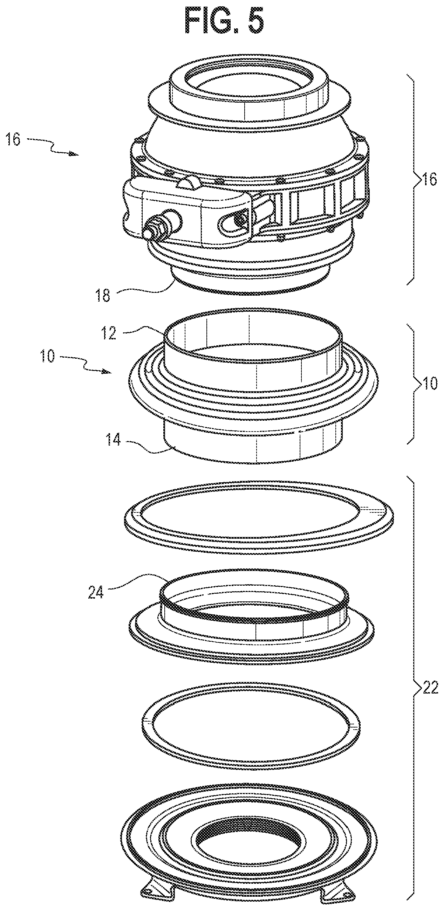

Referring now to Figure 1, the disclosed bellows member 10 has first and second cuff ends 12, 14 for cooperating with components of a plumbing system. Figures 1-3 illustrate various views of the bellows member 10 and will be described in more detail below. In the specific example illustrated by Figures 4 and 5, the first cuff end 12 cooperates with a waste drain valve assembly 16, and the second cuff and 14 cooperates with an adapter 22.

An exemplary waste drain valve assembly is the waste drain ball valve 16 shown and described by co-pending PCT application publication WO 2021/041628, relevant contents of which are incorporated herein. As described in that application, the waste drain ball valve 16 may have a lower flange 18 that cooperates with the bellows member (in this PCT application, the bellows member shown is a prior art bellows member, but the bellows member disclosed herein may be used in its place instead). In some embodiments, the lower flange 18 may have a beaded end that helps mate with the bellows member 10. It is also standard to have a mechanical connection that tightens and secures the first plumbing interface to the first cuff end 12. The figures illustrate the use of a clamp 20, such as a band clamp, that secures the lower flange 18 to the first cuff end 12. Although a waste drain ball valve 16 is described as a possible first plumbing component interface, it should be understood that this disclosure is intended to be exemplary only, and that it is possible to use the disclosed bellows member 10 with alternate interfaces.

The second cuff and 12 cooperates with an adapter 22. One exemplary adapter 22 is shown and described by co-pending PCT application publication WO 2021/050926, relevant contents of which are incorporated herein. As described in that application, the adapter has a raised shoulder that functions as an upper flange 24 that cooperates with the bellows member 10. A second clamp 20, such as a band clamp, secures the upper flange 22 to the second cuff end 14.

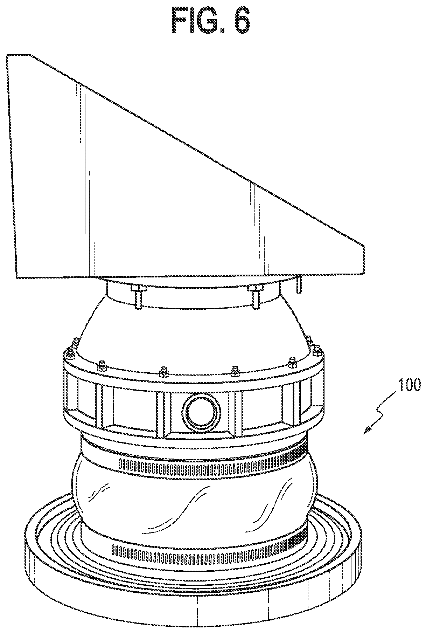

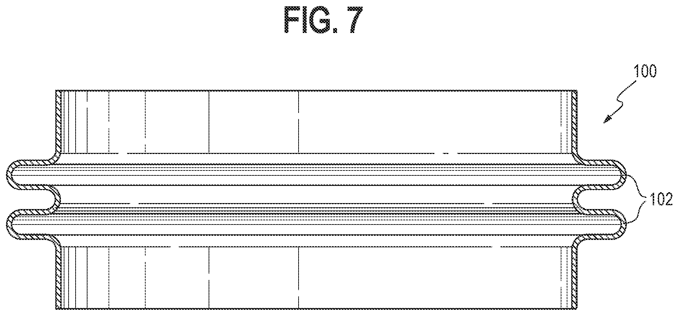

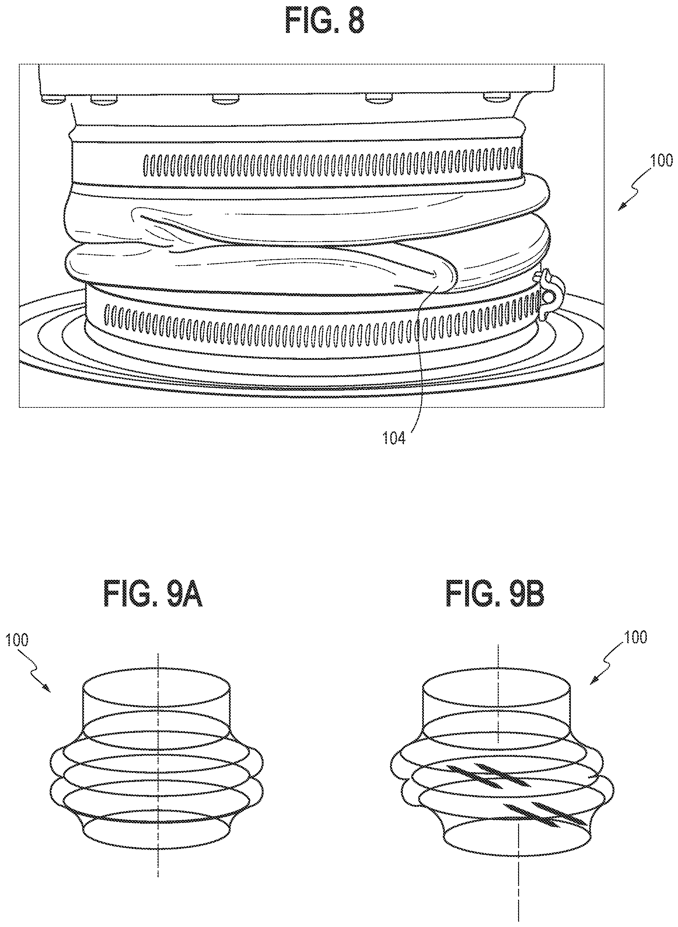

These secure connections generally need to be able to withstand high levels of pressure and vacuum, as well as maintain integrity upon operational movement or lateral shifting. However, traditional prior art bellows do not always function optimally. For example, prior art bellows 100 illustrated by Figure 6 have various problems. In one example, when pressure is applied to the components that are spanned by the bellows, the bellows member itself buckles outward, creating side bulges 102 illustrated by Figure 7. If the bellows 100 is then subjected to lateral misalignment as illustrated by Figure 8, the side bulges exhibit stress creases 104. Figure 9A shows a prior art bellows 100 when its connected interface components are aligned. Figure 9B shows areas of shear stress during lateral misalignment or displacement of a prior art bellows 100. These various pressures can weaken the bellows 100, diminishing its useful lifetime.

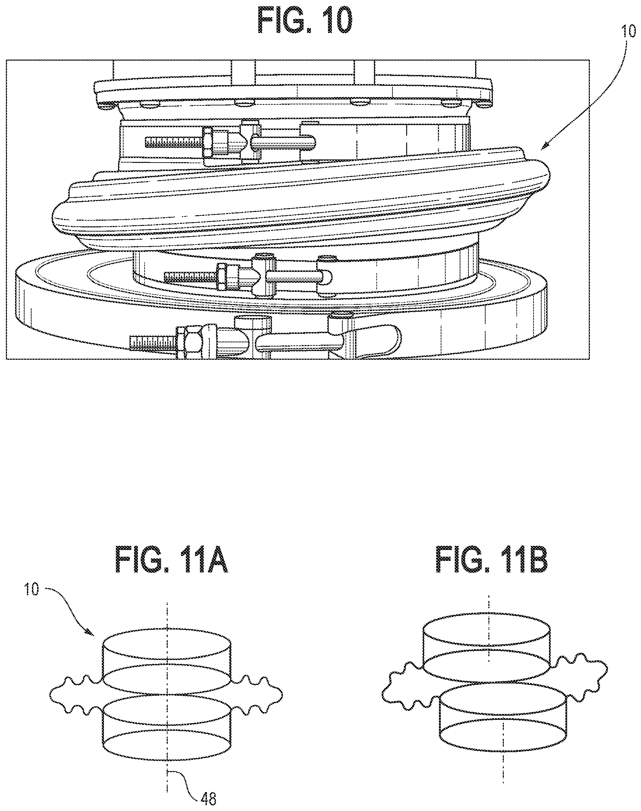

By contrast, when pressure and lateral misalignment are applied to the disclosed bellows member 10, its rings are caused to pivot, reducing shear stress. This is illustrated by Figure 10, in which the bellows member 10 is shown moving side to side in response to operational lateral misalignment. This response to operational lateral misalignment is also illustrated by the schematic of Figures 11A and 11B. Figure 11A illustrates a side schematic view of a bellows member 10. Figure 11B illustrates a force F being applied to one of the interfaces to which the bellows member is connected. As shown, the bellows member "hulas" from side to side upon vibration/lateral misalignment. It does not twist or shear.

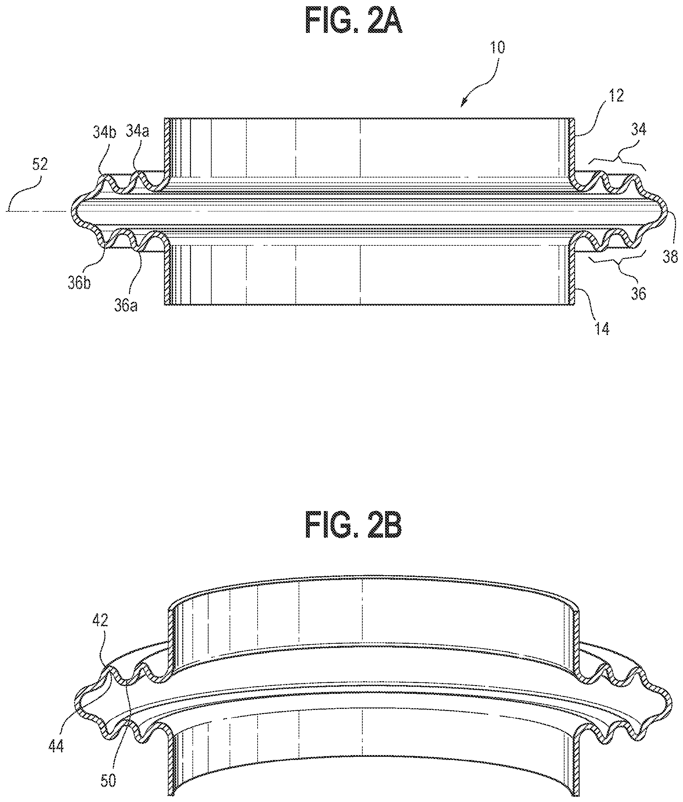

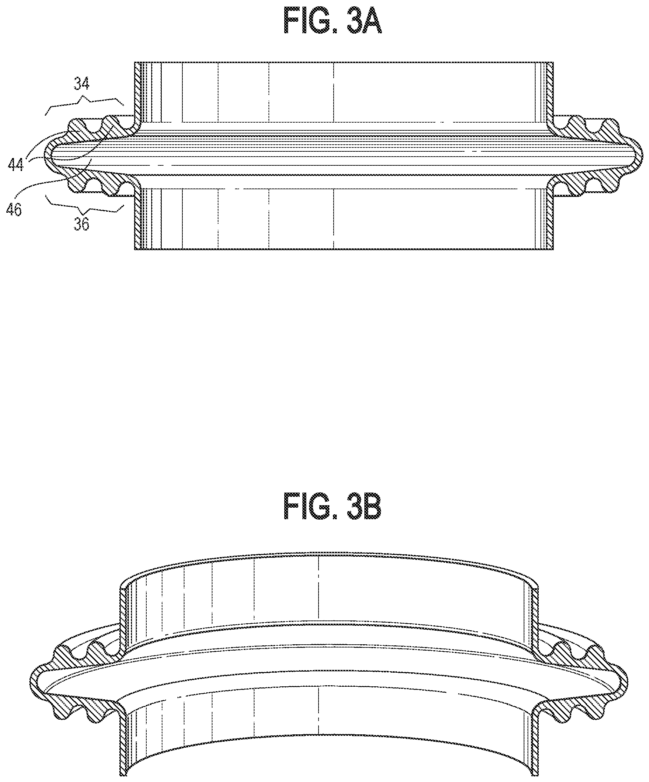

Reference will now be made to the structural components of the disclosed bellows member 10. Referring back to the perspective view of Figure 1 and the cross-sectional views of Figures 2 and 3, the bellows member 10 is defined by a bellows body 30 that comprises a plurality of convolutes 32. In the specific example shown, there are five convolutes 32 in total. There may be an upper set 34 of convolutes (two in total), a lower set 36 of convolutes (two in total), and a single outer convolute 38. The convolutes collectively appear as "rings" that encircle a central opening 40. The inner upper convolute 34a and the inner lower convolute 36a appear to form a first "ring" in the cross-sectional view of Figure 2. The outer upper convolute 34b and the outer lower convolute 36b appear to form a second "ring" in the cross-sectional view of Figure 2. The outer convolute 38 appears to form an outer ring in the cross-sectional view of Figure 2. The convolutes 32 are oriented radially outwardly from the central opening 40. They generally form a series of concentric rings extending out from the central opening 40 on a horizontal plane 52. It should be understood that although two "sets" of radial convolutes are illustrated, it is possible to provide only a single upper convolute, a single lower convolute, joined by a single outer convolute. It is also possible to provide more than two "sets" of convolutes, such that there are more than two upper convolutes 34 and more than two lower convolutes 36. Any number of radial convolutes may be provided. It is expected that how ever many radial convolutes are provided, the outermost upper and outermost lower convolute will be joined by a single outer convolute 38.

Each of convolutes 32 is generally shaped in cross-section like a semi-circle, such that it has a partial outer curvature 42. The exterior surface of the bellows body 30 somewhat resembles a series of hills and valleys, with the "hills" created by the partial outer curvatures 42 that form ridges 44 and the "valleys" created by a space 50 between each convolute.

In one embodiment, the convolutes are similarly sized, such that the partial outer curvatures 42 are generally equal. It is possible for the partial outer curvature 42 of the outer convolute 38 to be larger than the curvatures of the other convolutes 32. In an alternate embodiment, the convolutes 32 may have differently-sized partial outer curvatures 42. It is also possible for the spaces 50 between the convolutes to be similarly-sized or varied in size.

As shown by the figures, two set of convolutes form the appearance of "rings" that are oriented radially about the Z axis and lying on or near the XY plane. A first inner ring has a first smaller diameter and a second outer ring has a second larger diameter.

The shape of the bellows body 30 allows it to move in order to accommodate off-axis lateral misalignment, as well as resist vacuum implosion and internal pressurization. The presence of the convolutes 32 allows the convolutes of the bellows body 30 to roll with respect to one another upon sideways pressure or off-axis lateral misalignment, as illustrated by Figure 10. In other words, the rings formed by the convolutes are allowed to pivot about a central axis 48. The presence of the space 50 between each convolute allows the "rings" to squeeze into one another or to spread out horizontally, depending upon direction of the pressure. In effect, the bellows body 30 works somewhat like a spine, with space between each vertebrae that can allow compression or expansion or pivoting of the spine. It is allowed to flex upon application of movement. The convolutes 32 and spaces 50 absorb movement in various directions so they are not sheared. This dynamic pivoting and movement occurs rather than shear stress that is experienced by prior art bellows 100 during lateral misalignment.

Figure 3 illustrates an alternate embodiment in which the upper set 34 and lower set 36 of convolutes have their internal ridges 44 filled in with material, such that there are not open internal spaces/ridges illustrated by Figure 2. This creates a smooth void 46 within the bellows body 30. This smooth void 46 is a generally internal space 46 without internal bulges or ridges. (By contrast, the internal space of Figure 2 has ridges 44 that extend outward from a bellows interior.) It is believed that providing a generally smooth void 46 can help prevent debris from collecting within the internal ridges. It is further envisioned that this embodiment does not alter the alignment accommodating characteristics described herein.

The bellows member 10 is generally manufactured out of a material that can be as stiff as possible in order to absorb vacuum (and not implode upon application of vacuum pressure) and withstand pressure requirements, but not be so stiff that it loses its displacement ability during use. The material choice is also dependent upon required compatibility with certain chemicals or other environmental conditions in the environment of use. For example, if the bellows member 10 is intended to be used on board an aircraft or other aerospace usage, the material should be able to withstand a certain temperature requirements, such as repeated freezing without damage under extreme environments, should be able to withstand certain vacuum pressure requirements, should be able to withstand deflection based on aircraft loads, and should be able to meet other set regulation requirements without losing its shape. Exemplary materials that may be used include but are not limited to thermoplastic urethane polyester, polyurethane, nitrile, synthetic rubber, fluoropolymer elastomer, silicone, neoprene, or any combination thereof. Any materials that are suitable for platforms and waste applications are possible. Other appropriate material options are possible and considered within the scope of this disclosure.

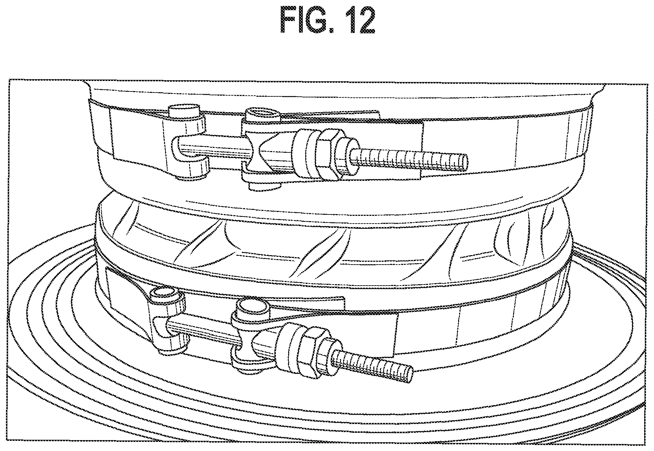

Although previous bellows were manufactured of silicone or neoprene or other generally flexible material that could be stretched, it has been found that such flexible material is not optimal for the present design because it tends to implode upon application of vacuum (see Figure 12) and buckle or twist or otherwise be subject to shear stress upon application of lateral displacement (see Figures 8 and 9b). By contrast, the disclosed bellows member tends to pancake upon itself, but it does not implode or twist.

The subject matter of certain embodiments of this disclosure is described with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described.

It should be understood that different arrangements of the components depicted in the drawings or described above, as well as components and steps not shown or described are possible. Similarly, some features and sub-combinations are useful and may be employed without reference to other features and sub-combinations. Embodiments of the invention have been described for illustrative and not restrictive purposes, and alternative embodiments will become apparent to readers of this patent. Accordingly, the present invention is not limited to the embodiments described above or depicted in the drawings, and various embodiments and modifications may be made without departing from the scope of the claims below.

## Claims

1. A bellows member (10) for connecting two plumbing interfaces, the bellows member comprising:
a first cuff end (12);
a second cuff end (14);
a central opening (40);
a bellows body (30) comprising at least one upper convolute (34), at least one lower convolute (36), and an outer convolute (38),
wherein the at least one upper convolute (34) comprises a set (36) of upper convolutes (34) and wherein the at least one lower convolute (36) comprises a set (36) of lower convolutes (36), further comprising a space (50) between each upper convolute in the set (36) of upper convolutes (34) and a space (50) between each lower convolute in the set (36) of lower convolutes (36), **characterized in that** the at least one upper convolute (34) and the at least one lower convolute (36) comprise ridges (44) that create the appearance of rings that encircle the central opening,
wherein the space (50) between each convolute (34, 36) allows the rings formed by the convolutes (34, 36) to compress or expand horizontally.

2. The bellows member (10) of claim 1, wherein the convolutes extend radially from the central opening (40) along a horizontal plane (52).

3. The bellows member (10) of claim 1, wherein the convolutes create the appearance of two rings that encircle the central opening (40), a first inner ring with a smaller diameter than a second outer ring.

4. The bellows member (10) of claim 1, wherein the at least one upper convolute (34), the at least one lower convolute (36), and the outer convolute (38) each have partial outer curvature (42).

5. The bellows member (10) of claim 4, wherein the partial outer curvature (42) defines ridges (44).

6. The bellows member (10) of claim 4, wherein an interior space (50) of each of the ridges (44) is filled with material, forming an internal smooth void (46) within the bellows body (30).

7. The bellows member (10) of claim 1, wherein a vertical height of the bellows member (10) is about 1.27 cm (½ inch) to about 10.16 cm (four inches).

## Patentansprüche

1. Faltenbalgelement (10) zur Verbindung von zwei Rohrleitungsanschlussstellen, wobei das Faltenbalgelement Folgendes umfasst:
ein erstes Manschettenende (12);
ein zweites Manschettenende (14);
eine zentrale Öffnung (40);
einen Faltenbalgkörper (30), der mindestens eine obere Balgwelle (34), mindestens eine untere Balgwelle (36) und eine äußere Balgwelle (38) umfasst,
wobei die mindestens eine obere Balgwelle (34) einen Satz (36) von oberen Balgwellen (34) umfasst, und wobei die mindestens eine untere Balgwelle (36) einen Satz (36) von unteren Balgwellen (36) umfasst, ferner umfassend einen Raum (50) zwischen jeder oberen Balgwelle in dem Satz (36) von oberen Balgwellen (34)und einen Raum (50) zwischen jeder unteren Balgwelle in dem Satz (36) von unteren Balgwellen (36), **dadurch gekennzeichnet, dass** die mindestens eine obere Balgwelle (34) und die mindestens eine untere Balgwelle (36) Erhöhungen (44) umfassen, die den Anschein von Ringen, die die zentrale Öffnung umgeben, erzeugen,
wobei der Raum (50) zwischen jeder Balgwelle (34, 36) ermöglicht, dass sich die Ringe, die durch die Balgwellen (34, 36) gebildet werden, horizontal komprimieren oder ausdehnen.

2. Faltenbalgelement (10) nach Anspruch 1, wobei sich die Balgwellen von der zentralen Öffnung (40) aus radial entlang einer horizontalen Ebene (52) erstrecken.

3. Faltenbalgelement (10) nach Anspruch 1, wobei die Balgwellen den Anschein von zwei Ringen, die die zentrale Öffnung (40) umgeben, erzeugen, wobei ein erster innerer Ring einen kleineren Durchmesser als ein zweiter äußerer Ring aufweist.

4. Faltenbalgelement (10) nach Anspruch 1, wobei die mindestens eine obere Balgwelle (34), die mindestens eine untere Balgwelle (36) und die äußere Balgwelle (38) jeweils eine partielle Außenwölbung (42) aufweisen.

5. Faltenbalgelement (10) nach Anspruch 4, wobei die partielle Außenwölbung (42) Erhöhungen (44) definiert.

6. Faltenbalgelement (10) nach Anspruch 4, wobei ein Innenraum (50) von jeder der Erhöhungen (44) mit Material gefüllt ist, wodurch ein innenliegender glatter Hohlraum (46) innerhalb des Faltenbalgkörpers (30) gebildet wird.

7. Faltenbalgelement (10) nach Anspruch 1, wobei eine vertikale Höhe des Faltenbalgelements (10) 1,27 cm (½ Zoll) bis etwa 10,16 cm (vier Zoll) beträgt.

## Revendications

1. Organe à soufflet (10) pour relier deux interfaces de plomberie, l'organe à soufflet comprenant :
une première extrémité de manchette (12) ;
une seconde extrémité de manchette (14) ;
une ouverture centrale (40) ;
un corps de soufflet (30) comprenant au moins une spirale supérieure (34), au moins une spirale inférieure (36), et
une spirale extérieure (38),
dans lequel l'au moins une spirale supérieure (34) comprend un ensemble (36) de spirales supérieures (34) et dans lequel l'au moins une spirale inférieure (36) comprend un ensemble (36) de spirales inférieures (36), comprenant en outre un espace (50) entre chaque spirale supérieure dans l'ensemble (36) de spirales supérieures (34) et un espace (50) entre chaque spirale inférieure dans l'ensemble (36) de spirales inférieures (36), **caractérisé en ce que** l'au moins une spirale supérieure (34) et l'au moins une spirale inférieure (36) comprennent des arêtes (44) qui créent l'apparence d'anneaux entourant l'ouverture centrale,
dans lequel l'espace (50) entre chaque spirale (34, 36) permet aux anneaux formés par les spirales (34, 36) de se comprimer ou de se dilater horizontalement.

2. Organe à soufflet (10) selon la revendication 1, dans lequel les spirales s'étendent radialement à partir de l'ouverture centrale (40) le long d'un plan horizontal (52).

3. Organe à soufflet (10) selon la revendication 1, dans lequel les spirales créent l'aspect de deux anneaux qui entourent l'ouverture centrale (40), un premier anneau intérieur d'un diamètre plus petit qu'un second anneau extérieur.

4. Organe à soufflet (10) selon la revendication 1, dans lequel l'au moins une spirale supérieure (34), l'au moins une spirale inférieure (36) et la spirale extérieure (38) présentent chacune une courbure extérieure partielle (42).

5. Organe à soufflet (10) selon la revendication 4, dans lequel la courbure extérieure partielle (42) définit des arêtes (44).

6. Organe à soufflet (10) selon la revendication 4, dans lequel un espace intérieur (50) de chacune des arêtes (44) est rempli de matériau, formant un vide interne lisse (46) à l'intérieur du corps de soufflet (30).

7. Organe à soufflet (10) selon la revendication 1, dans lequel une hauteur verticale de l'organe à soufflet (10) est d'environ 1,27 cm (½ pouce) à environ 10,16 cm (quatre pouces) .
